# EUROPÄISCHE PATENTSCHRIFT

(11) **EP 1 733 790 B1**
(45) Veröffentlichungstag und Bekanntmachung des Hinweises auf die Patenterteilung: **27.08.2008**
(21) Anmeldenummer: 06012086.2
(22) Anmeldetag: 13.06.2006
(51) Int. Cl.: B01J 35/04, F01N 3/28, B21D 13/04

(54) **Strukturierte Metallfolie für einen Wabenkörper**
Structured metal sheet for a honeycomb body
Feuille métallique structurée pour corps en nid d'abeille

(30) Priorität: 14.06.2005 DE 102005027582
(43) Veröffentlichungstag der Anmeldung: 20.12.2006
(73) Patentinhaber: Unimet GmbH, 87669 Rieden (DE)
(72) Erfinder: Kolb, Rudi, 87629 Füssen-Hopfen (DE)
(74) Vertreter: Kloiber, Thomas

(56) Entgegenhaltungen:
- DE-B3- 10 304 814
- US-A- 5 045 403
- US-A- 6 057 263

## Beschreibung

Die vorliegende Erfindung betrifft eine strukturierte Metallfolie für einen Wabenkörper, der insbesondere als Katalysator-Trägerkörper verwendbar ist, mit einer primären und mindestens einer weiteren, sekundären Struktur, wobei die primäre Struktur als Wellenstruktur ausgebildet ist, wobei mindestens die sekundäre Struktur die primäre Struktur zumindest teilweise überlagert, wobei mindestens die sekundäre Struktur überwiegend parallel zur primären Struktur angeordnet ist, wobei wenigstens die sekundäre Struktur eine von der primären Struktur unterschiedliche Frequenz und/oder Amplitude aufweist, und wobei mindestens die sekundäre Struktur intermittierend ausgebildet ist, wobei die sekundäre Struktur aus Strukturelementen in mehr als einer geometrischen Form gebildet ist.

Solche strukturierten Metallfolien werden zu langen Bändern gefaltet und zu dreidimensionalen Wabenkörpern mit spezieller Geometrie gewickelt. Die Wabenkörper weisen dabei aufgrund der Struktur der verwendeten Metallfolie eine Vielzahl von kanalförmigen Wabenzellen auf, deren Wandungen mit einer katalytisch aktiven Beschichtung versehen wird. Die so behandelten Wabenkörper werden in Katalysatoren für Verbrennungsmotoren von Kraftfahrzeugen eingesetzt, um deren Abgas zu reinigen und die durch zunehmende Mobilität verursachte Schadstoffbelastung der Umwelt zu reduzieren.

Strukturierte Metallfolien sind aufgrund ihrer vorteilhaften physikalischtechnischen Eigenschaften wie hohe mechanische und thermische Stabilität, hierfür besonders geeignet. Diese hohe Stabilität erlaubt extrem dünne Wandstärken der Metallfolien, so dass in einem geringen Katalysatorbauvolumen eine Vielzahl von kanalartigen Wabenzellen realisierbar sind, die zusätzlich noch eine geringe Gesamtmasse aufweisen. Die Vielzahl der Wabenzellen ermöglicht eine hohe Konversionsrate des Abgases, die aufgrund der geringen Masse des Wabenkörpers bereits nach kurzer Aufwärmzeit erreicht wird. Da die Konversionsrate des Abgases bei gegebenem Volumenstrom proportional zur Katalysatoroberfläche, damit zur Wabenkörperoberfläche und somit auch zur Metallfolienoberfläche ist, führt eine Vergrößerung der Metallfolienoberfläche zu einer höheren Konversionsrate. Bei gegebener Metallfolienoberfläche führt eine Erhöhung der Kontaktzeit des Abgases mit der Metallfolienoberfläche zu einer höheren Konversionsrate des Abgases. Die Kontaktzeit kann erhöht werden, indem der Abgasstrom durch längere Strömungswege eine längere Aufenthaltsdauer im Wabenkörper und damit im Katalysator hat. Nachteilig daran ist jedoch; dass verlängerte Strömungswege den Druckabfall über den Katalysator erhöhen und damit die Motorleistung verringern.

In der Vergangenheit wurden bereits Metallbänder mit Wellenstruktur eingesetzt. Ein Verfahren zur Herstellung einer strukturierten Metallfolie sowie eine solche wird in der DE 103 04 814 B3 beschrieben. Dabei wird ein Blech zwischen zwei kämmenden Wellwalzen hindurchgeführt, so dass durch Biege-und Ziehvorgänge zwischen den ein Profilsegment bildenden ineinandergreifenden Wellen, eine Wellstruktur mit primärer und sekundärer Struktur auf dem Blech entsteht. Aus dieser Schrift ist eine mehrfach strukturierte Metallfolie bekannt, deren Sekundärstruktur Anströmflächen zur Verwirbelung des Abgasstroms und zur Durchmischung benachbarter Teilströme bereitstellt. Nachteilig an diesem Stand der Technik ist die nicht optimale Effizienz des Katalysators.

Aus der US 5.045.403 ist ein wabenähnlicher Körper bekannt, der eine primäre und eine sekundäre Struktur aufweist, wobei die primäre Struktur eine Wellenstruktur ist. Bekannt ist auch eine im Querschnitt zickzackförmige primäre Struktur, in die eine zickzackförmige sekundäre Struktur eingeprägt ist mit gleichartigen Strukturelementen, jedoch in unterschiedlicher Größe. Aus der US 6,057,263 ist ein metallener Katalysatorträgerkörper bekannt, der unterschiedlich ausgeprägte Primärstrukturen offenbart, die sich axial abwechseln. Nachteilig an diesem Stand der Technik ist die geringe Effizienz des Katalysators.

Aufgabe der vorliegenden Erfindung ist es daher, eine strukturierte Metallfolie mit großer Oberfläche anzugeben, deren Struktur eine Verbesserung der Effizienz des Katalysators erlaubt.

Diese Aufgabe wird dadurch gelöst, dass wenigstens die sekundäre Struktur eine von der primären Struktur unterschiedliche Frequenz aufweist, und dass die sekundäre Struktur aus Strukturelementen in mehr als zwei geometrischen Formen gebildet ist, vorzugsweise aus Strukturelementen in vier geometrisch unterschiedlichen Formen besteht, wobei die Strukturelemente sich abwechselnd vorgesehen sind. Durch diese erfinderische Maßnahme wird mit großem Vorteil eine große und labyrinthische Oberfläche der Metallfolie erzeugt, die über Oberflächenvergrößerung und längere Strömungswege zu einer Effektivitätssteigerung des Katalysators führt. Der Abgasstrom wird aufgrund der unterschiedlich ausgebildeten Sekundärstruktur auf vielfältige Weise in sich gegenseitig durchdringende Teilströme aufgeteilt und bei Beibehaltung einer laminaren Strömung wiederholt umgelenkt. Dies erfolgt ohne Erhöhung des Druckabfalls, da die Umlenkung erfindungsgemäß nur um wenige Grade erfolgt. Die Ausbildung der Sekundärstruktur in unterschiedlicher Geometrie erlaubt darüber hinaus eine Kombination der Vorteile bestimmter Geometrien unter Vermeidung oder Kompensierung ihrer jeweiligen Nachteile .

Sind die geometrischen Formen der sekundären Struktur sich längs und/oder quer zu den Wellen der ersten Struktur abwechselnd vorgesehen, insbesondere jeweils in periodischer Folge, wird mit großem Vorteil eine möglichst labyrinthische Oberfläche erzeugt, da sowohl in Längsrichtung als auch in Querrichtung zum Abgasstrom unterschiedliche Formen zu unterschiedlichen Strömungswegen führen.

In Ausgestaltung der Erfindung ist vorgesehen, dass die sekundäre Struktur in Relation zu Wellenbergen der primären Struktur Formen aus der Gruppe aufweist, die gebildet ist durch rechtsbündige Keilform, linksbündige Keilform, zentrische Schaufelform, und in Relation zu Wellentälern der primären Struktur die Form einer vom Wellental vertikal in Richtung Wellenberg ansteigenden Hutze aufweist. Unter Keilform wird hierbei erfindungsgemäß eine geometrische Form der sekundären Struktur verstanden, die in Bezug auf eine Breite und einer Amplitude einer Welle der primären Struktur in Strömungsrichtung eines Abgases zunächst eine geringere Breite und Amplitude aufweist, die sich linear oder nicht linear bis zum Ende der geometrischen Form auf die Breite und Amplitude der primären Struktur vergrößert, wobei primäre und sekundäre Struktur stets eine gemeinsame Wellenflanke aufweisen. "Rechtsbündig" oder "linksbündig" bedeuten erfindungsgemäß demnach, dass, in Strömungsrichtung gesehen, entweder die rechte oder die linke Wellenflanke die gemeinsame Wellenflanke beider Strukturen ist. Die Keilform bildet demnach in Strömungsrichtung gesehen eine Durchtrittsöffnung mit Anströmkante und Stromleitfläche, wobei der Abgasteilstrom von einer unterhalb der Folie angeordneten Strömung durch die Durchtrittsöffnung zu einer auf der Folie angeordneten Strömung vertikal und dort von der größer werdenden Wellenbreite der sekundären Struktur zusätzlich horizontal umgelenkt wird. Die Keilformen sind erfindungsgemäß überwiegend auf jeweils einem Wellenberg der primären Struktur angeordnet. Unter zentrischer Schaufelform wird erfindungsgemäß eine geometrische Form der sekundären Struktur verstanden, bei der ein Wellenberg der primären Struktur bei gleich bleibender Wellenbreite so verflacht wird, dass sein Maximum zu Beginn der geometrischen Form in Strömungsrichtung gesehen, in etwa auf der Höhe eines Wellentals der primären Struktur liegt, und von da bis zum Ende der sekundären Struktur wieder auf die Höhe des üblichen Maximums der Wellen der primären Struktur zurückkehrt. Hierbei bildet sich eine Art Kanal, dessen Seitenwandränder zunächst -in Strömungsrichtung gesehen- oberhalb des Kanalbodens liegen. Im Verlauf dieser Form der sekundären Struktur bleiben die Seitenwandränder gleichhoch, wohingegen der Kanalboden wie geschildert ansteigt. Diese geometrische Form der sekundären Struktur besteht also aus einem Wellenberg der primären Struktur, der partiell in ein Wellental umgeformt ist und im Verlauf der geometrischen Form zu einem Wellenberg zurückgeformt ist. Diese Form stellt ebenfalls eine Durchtrittsöffnung mit Anströmkante zur Verfügung, ihre Stromleitfläche ist jedoch vertikal orientiert und leitet einen Abgasteilstrom von unterhalb der Folienebene auf überhalb der Folienebene. Gleichzeitig führt diese Form dazu, dass der vertikal abgelenkte Abgasteilstrom an dem ansteigenden Kanalboden etwa in dem Bereich, wo dieser die Seitenwandrandhöhe überschreitet, in zwei horizontale Teilströme aufgesplittet wird. Unter Hutze wird erfindungsgemäß eine geometrische Form verstanden, die als schräggestelltes Rohr in einem Wellental der primären Struktur eine Durchtrittsöffnung für einen Abgasteilstrom von oberhalb der Folienebene nach unterhalb der Folienebene zur Verfügung stellt. Eine Hutze leitet also einen in einem Wellental strömenden Abgasteilstrom in eine in einem Wabenkörper untere Wabenzelle weiter, ohne einen nennenswerten Strömungswiderstand zu bieten. Die Keilform ermöglicht den Durchtritt eines Teilabgasstroms aus einem Wabenzellengang in einen anderen, wobei eine Kombination aus einem rechtsbündigen und einem linksbündigen Keil zu einer Art Weiche führt, die einen Abgasteilstrom auftrennt und in jeweils unterschiedliche Wabenzellen weiterleitet. Dies führt zu einer besonders guten Durchmischung und zu einer Verlängerung des Strömungsweges, ohne den Druckverlust nennenswert zu erhöhen.

Weist die primäre Struktur periodisch wiederkehrende Bereiche ohne weitere Struktur auf, wird der Abgasstrom mit großem Vorteil beruhigt, so dass sich eventuell aufgetretene Strömungswirbel oder turbulente Strömungsbereiche verlangsamen und in einen laminaren Zustand zurückkehren können, der die effizienteste Konversion und damit eine sehr hohe Konversionsrate ermöglicht. Diese Bereiche sind erfindungsgemäß vor allem zwischen zwei sekundären Strukturen angeordnet, und trennen somit deren End- und Anfangsbereiche.

In Ausgestaltung der Erfindung ist vorgesehen, dass sich die sekundäre Struktur über zwei Wellenlängen der primären Struktur erstreckend ausgebildet ist, wobei die sekundäre Struktur eine Amplitude kleiner gleich der der primären Struktur aufweist. Eine Erstreckung über zwei Wellenlängen der Primärstruktur führt zu einer Art zweidimensionalen Weiche, die einen horizontal strömenden Abgasteilstrom in zwei horizontale Teilströme aufteilt. Ist die Amplitude der sekundären Struktur geringer, überragt also die primäre Struktur die sekundäre, ist weiterhin eine Aufteilung in die dritte Dimension möglich, so dass die Abgasteilströme besonders gut durchmischt und in langen Kontakt mit den katalytisch aktiven Wänden der strukturierten Metallfolie gebracht werden. Hierdurch wird eine effektive katalytische Umsetzung erreicht. Eine sekundäre Struktur, die sich über zwei Wellenlängen der primären Struktur erstreckt, besteht vorzugsweise aus unterschiedlichen geometrischen Formen: Quer zur Strömungsrichtung gesehen, beispielsweise aus einem linksbündigem Keil, einer Hutze und einem rechtsbündigen Keil oder aus einer zentrischen Schaufel, deren Randbereiche mit zur primären Form gleichgroßen Amplitude in Form zweier Hutzen ausgebildet sind.

Ist in allen oder ausgewählten Übergangsbereichen zwischen primärer und wenigstens sekundärer Struktur Metallfolienmaterial entfernt, vorzugsweise in ausgestanzter Langlochform, werden Spannungen im Metall während des Herstellvorgangs vermieden. Spätere Vibrationsrisse im rauen Einsatz des Katalysators werden verhindert, so dass einer Absenkung der katalytischen Leistungsfähigkeit während des Betriebs vorgebeugt ist. Die Stanze in Form eines Langlochs ist besonders vorteilhaft und einfach zu realisieren, die Erfindung umfasst jedoch auch andere Formen wie Knochen-, Kreis- oder Doppellochformen. Das Entfernen von Material vergrößert weiterhin die Oberfläche der strukturierten Metallfolie und stellt Anströmkanten zur Verfügung.

Dadurch, dass die Keilformen der sekundären Struktur eine alternierende Orientierungsrichtung aufweisen, wird mit großem Vorteil eine Aufteilung der Abgasteilströme erreicht. Eine Rechtsbündig-Linksbündig-Kombination führt zur Realisierung einer Weiche wie beschrieben.

In Ausgestaltung der Erfindung ist vorgesehen, dass die geometrischen Formen der sekundären Struktur die sich wiederholende Abfolge ABCD oder A'B'A'C' aufweisen, wobei A eine linksbündige Keilform im Wellenberg, B eine zentrische Schaufelform im Wellenberg, C eine rechtsbündige Keilform im Wellenberg, D eine Hutzenform im Wellental, A' eine Bereich der primären Struktur ohne sekundäre Struktur, B' eine sekundäre Struktur mit einem Frequenzverhältnis von 3:2 zur primären Struktur bei gleicher Amplitude und C' eine sekundäre Struktur mit einem Frequenzverhältnis von 2:1 zur primären Struktur bei kleinerer Amplitude, wobei die sekundäre Struktur aus der Formenfolge rechtsbündige Keilform, wellentalmittige Hutze und linksbündige Keilform besteht, ist. Eine solche, sich in räumlich getrennten Bereichen der primären Struktur wiederholende Abfolge hat eine besonders wirksame katalytische Effizienz zur Folge, da auf diese Weise besonders hohe Kontaktzeiten des Abgases mit der katalytischen Beschichtung bei geringem Druckabfall verwirklicht sind.

Erfindungsgemäß ist weiterhin vorgesehen, dass die Metallfolie eine Breite von 50 bis 210 mm und eine Dicke von 0,02 bis 0,12, vorzugsweise eine Dicke von 0,05 mm aufweist. Derartig dünne und breite Metallfolien ergeben besonders leichte und stabile Wabenkörper, so dass die Effizienz von hieraus gefertigten Katalysatoren besonders hoch liegt.

Im Folgenden werden anhand der Figuren der Zeichnung weitere Einzelheiten und Vorteile der Erfindung erläutert. Im einzelnen zeigen die Figuren der Zeichnung dabei
- Fig. 1:: eine perspektivische Ansicht einer bekannten strukturierten Metallfolie,
- Fig. 2a-e:: eine perspektivische Ansicht einer erfindungsgemäßen Metallfolie mit Details zur sekundären Struktur und
- Fig. 3a-b:: eine perspektivische Ansicht einer zweiten Ausführungsform einer erfindungsgemäßen Metallfolie mit einem Detail zur sekundären Struktur.

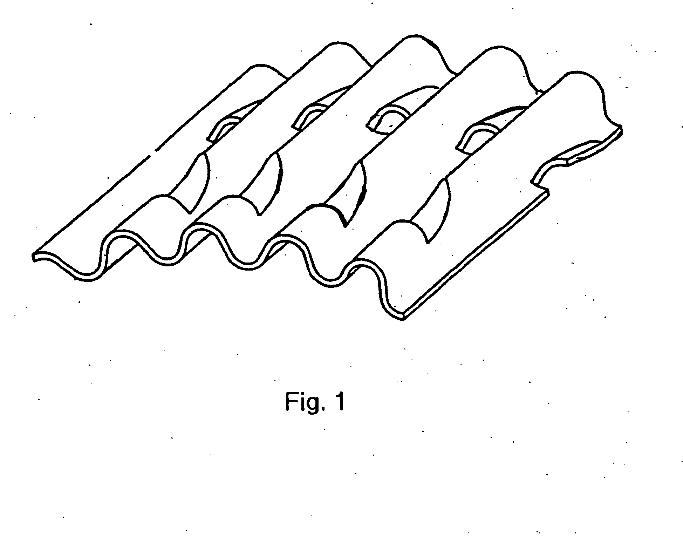

Fig. 1 zeigt eine Metallfolie, wie sie durch kämmende Walzen herstellbar ist. Erkennbar ist eine wellenförmige primäre Struktur, in deren Wellenberge und - täler eine sekundäre Struktur eingebracht ist, wobei diese aus einer einzigen, an der Folienebene gespiegelten, geometrischen Form besteht, die eine geringere Frequenz als die der primären Struktur aufweist.

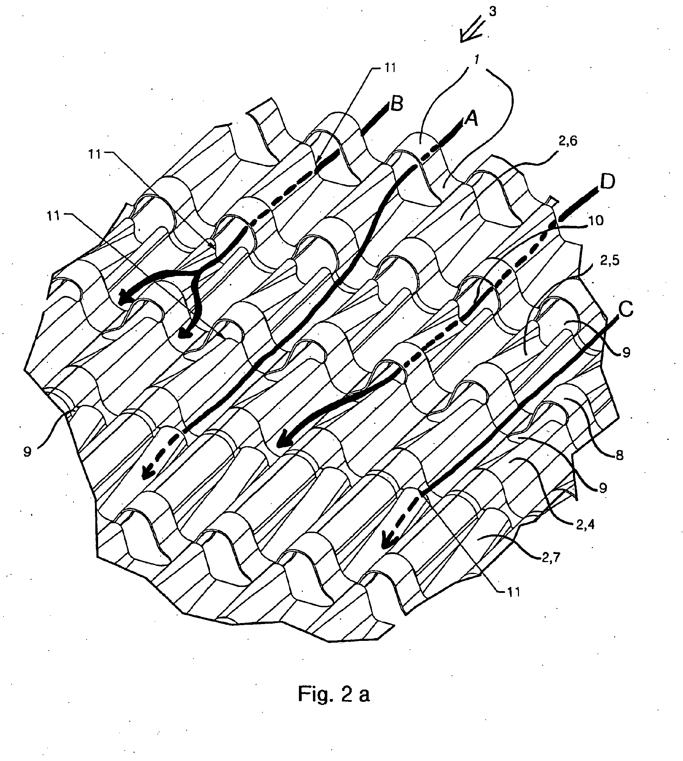

Im Gegensatz dazu zeigt Fig. 2a eine strukturierte Metallfolie gemäß der Erfindung. Eine primäre Struktur 1 ist als wellenförmige Struktur mit Wellentälern und -bergen ausgebildet. Die sekundäre Struktur 2 besteht aus verschiedenen geometrischen Formen, die eine bestimmte, wiederkehrende Reihenfolge aufweisen. Erfindungsgemäß könnte diesen beiden Strukturen auch eine tertiäre oder höhere Struktur überlagert sein, wobei derartige Strukturen den gleichen erfindungsgemäßen Prinzipien wie die sekundäre Struktur folgen. Eingezeichnet ist weiterhin eine Strömungsrichtung 3 eines Abgases. Die sekundäre Struktur 2 besteht aus vier geometrischen Formen, die in Strömungsrichtung 3, bzw. zur Längsrichtung der Metallfolie, jeweils unmittelbar aufeinanderfolgen und deren Abfolge sich wiederholt. Die Formen der sekundären Struktur 2 sind dabei durch, in Relation zu diesen, relativ schmale ungestörte Bereiche 8 der primären Struktur 1 getrennt. Zu Beginn jeder sekundären Form ist ein Bereich mit entferntem Metallfolienmaterial 9 vorgesehen. Die Materialentfernung führt zu spannungsfrei herstellbaren strukturierten Metallfolien und bietet gleichzeitig zusätzliche Anströmkanten zur Leitung des Abgasstroms. Entlang der Strömungsrichtung 3 gesehen, besteht die Reihenfolge der Sekundärstrukturformen aus rechtsbündigen Keilen 6, zentrischen Schaufeln 5, linksbündigen Keilen 4 und horizontal geneigten Hutzen 7. Fig. 2a zeigt weiterhin vier Strömungslinien des Abgases, von denen eine -C- eine Strömung in einem Wellental der primären Struktur 1 und die drei anderen -A, B, D- solche unterhalb eines Wellenberges darstellen. Gut zu erkennen ist die aufgrund der unterschiedlichen Formen der sekundären Struktur 2 erzeugte Vielzahl an möglichen Strömungswegen, die sowohl eine horizontale als auch eine vertikale Umlenkung der Abgasteilströme ermöglichen. Insbesondere der Weg D führt zu einer mehrfachen, dreidimensionalen Umlenkung innerhalb nur eines sehr kurzen Stückes der erfindungsgemäß strukturierten Metallfolie.

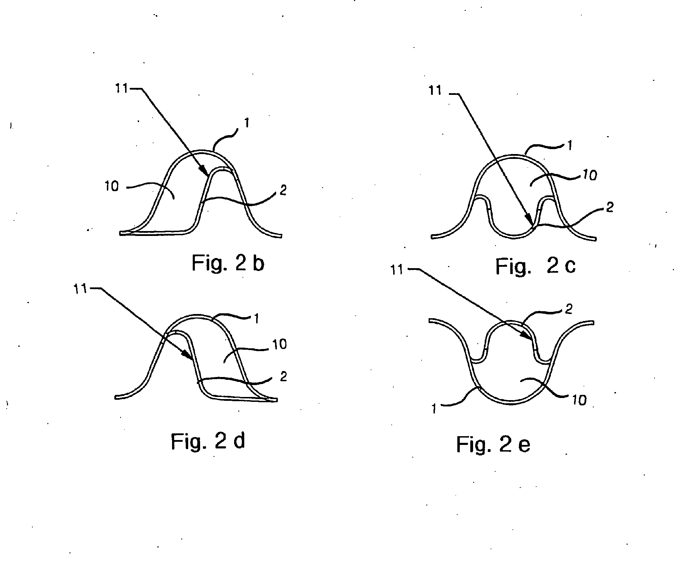

Fig. 2b-e zeigen die geometrischen Formen der sekundären Struktur in quer zur Strömungsrichtung 3 durch die horizontale Folienebene geschnittener Form im Bereich des Anfanges der jeweiligen geometrischen Form. In Fig. 2b ist ein rechtsbündiger Keil 6, in Fig. 2c eine zentrische Schaufel 5, in Fig. 2d ein linksbündiger Keil 4 und in Fig. 2e eine Hutze 7 dargestellt. Dargestellt sind ebenfalls die Durchtrittsöffnungen 10 und die Anströmkanten 11.

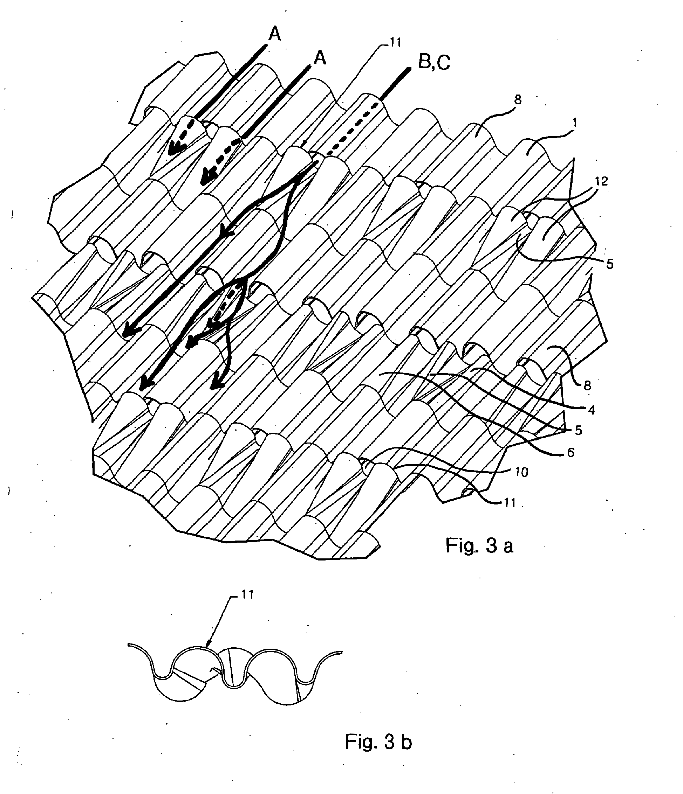

Fig. 3a zeigt eine zweite Ausführungsform der Erfindung. Die Reihenfolge der Formen der sekundären Struktur 2 ist hier in Strömungsrichtung 3 gesehen, ein ungestörter Bereich 8, Hutzen 7 mit zur primären Struktur 1 gleichen Amplitude und einem Frequenzverhältnis von 3:2, ein ungestörter Bereich 8 sowie Hutzen 7 mit zur primären Struktur verringerten Amplitude und einem Frequenzverhältnis von 2:1. Neben der aus Fig. 2a bekannten Folge der geometrischen Formen in Strömungsrichtung 3, besteht bei dieser Ausführungsform zusätzlich eine Folge der geometrischen Formen quer zur Strömungsrichtung. Die Folgen sind unterschiedlich ausgebildet. Zum einen ist die Folge eine Kombination von quer zur Strömungsrichtung 3 linksbündigem Keil 4, wellentalmittiger Hutze 7 und rechtsbündigem Keil 6, zum anderen die Kombination zweier Hutzen 7, bzw. einer zentrischen Schaufel 5 mit hutzenförmigen Rändern 12. Bei dieser Kombination gehen die einzelnen Formen ineinander über und sind nicht, wie im ersten Ausführungsbeispiel, voneinander unabhängig ausgebildet. Fig. 3a enthält wiederum Strömungslinien von Abgasteilströmen. Die Strömungslinie A zeigt die Strömung in einem Wellental der primären Struktur 1, die Strömungslinien B und C verlaufen zunächst unterhalb eines Wellenbergs dieser Struktur. Die zunächst parallel verlaufenden Strömungslinien B und C teilen sich im Bereich der ersten Form der sekundären Struktur 2 auf. Insbesondere der Strömungsweg C führt zu einer mehrfachen horizontalen und vertikalen Umlenkung des Abgasteilstroms, so dass eine besonders lange Kontaktzeit mit den Wänden und damit eine hohe Katalysatoreffizienz resultieren.

Fig. 3b zeigt in gleicher Schnittlage wie die Fig. 2b-e eine sekundäre Struktur 2.

Gut zu erkennen sind die fließenden Übergänge der einzelnen geometrischen Formen der sekundären Struktur, bzw., dass diese Kombination aus einer einheitlichen, durchgehenden geometrischen Form besteht, die zu einer horizontalen und vertikalen Durchmischung der Abgasteilströme führt.

Die strukturierten Folien beider Ausführungsbeispiele sind durch ein Folgeverbundwerkzeug herstellbar, das die Strukturen kontinuierlich in ein Endlosblech einbringt, und dabei die Verfahrensschritte ausführt: Folientransport, Ausstanzen der Übergangsbereiche der beiden Strukturen, einbringen einer ersten Struktur, nächster Transport zum zweiten Formgebungswerkzeug und Einbringen der sekundären Struktur.

### BEZUGSZEICHENLISTE

1. Primäre Struktur
2. Sekundäre Struktur
3. Strömungsrichtung
4. linksbündiger Keil
5. zentrische Schaufel
6. rechtsbündiger Keil
7. Hutze
8. ungestörter Bereich
9. entferntes Metallfolienmaterial
10. Durchtrittsöffnung
11.Anströmkante
12. hutzenförmiger Rand

## Patentansprüche

1. Strukturierte Metallfolie für einen Wabenkörper, der insbesondere als Katalysator-Trägerkörper verwendbar ist, mit einer primären (1) und mindestens einer weiteren, sekundären Struktur (2), wobei die primäre Struktur (1) als Wellenstruktur ausgebildet ist, wobei mindestens die sekundäre Struktur (2) die primäre Struktur (1) zumindest teilweise überlagert, wobei mindestens die sekundäre Struktur (2) überwiegend parallel zur primären Struktur (1) angeordnet ist, wobei wenigstens die sekundäre Struktur (2) eine von der primären Struktur (1) unterschiedliche Amplitude aufweist, und wobei mindestens die sekundäre Struktur (2) intermittierend ausgebildet ist, wobei die sekundäre Struktur (2) aus Strukturelementen in mehr als einer geometrischen Form gebildet ist, **dadurch gekennzeichnet, dass** wenigstens die sekundäre Struktur (2) eine von der primären Struktur (1) unterschiedliche Frequenz aufweist, und dass die sekundäre Struktur (2) aus Strukturelementen in mehr als zwei geometrischen Formen gebildet ist, vorzugsweise aus Strukturelementen in vier geometrisch unterschiedlichen Formen besteht, wobei die Strukturelemente sich abwechselnd vorgesehen sind.

2. Strukturierte Metallfolie gemäß Anspruch 1, **dadurch gekennzeichnet, dass** die geometrischen Formen der sekundären Struktur (2) sich längs und/oder quer zu den Wellen der ersten Struktur (1) abwechselnd vorgesehen sind, insbesondere jeweils in periodischer Folge.

3. Strukturierte Metallfolie gemäß Anspruch 1 oder 2, **dadurch gekennzeichnet, dass** die Strukturelemente der sekundären Struktur (2) in Relation zu Wellenbergen der primären Struktur rechtsbündige Keilform (6), linksbündige Keilform (4), zentrische Schaufelform (5) sind, und in Relation zu Wellentälern der primären Struktur (1) die Form einer vom Wellental horizontal in Richtung Wellenberg ansteigenden Hutze (7) sind.

4. Strukturierte Metallfolie gemäß Anspruch 1,2 oder 3, **dadurch gekennzeichnet, dass** die primäre Struktur (1) periodisch wiederkehrende Bereiche (8) ohne weitere Struktur aufweist.

5. Strukturierte Metallfolie nach einem der vorstehenden Ansprüche, **dadurch gekennzeichnet, dass** sich ein Strukturelement der sekundäre Struktur (2) über zwei Wellen der primären Struktur (1) erstreckend ausgebildet ist, wobei die sekundäre Struktur (2) eine Amplitude kleiner gleich der der primären Struktur (1) aufweist.

6. Strukturierte Metallfolie nach einem der vorstehenden Ansprüche, **dadurch gekennzeichnet, dass** in allen oder ausgewählten Übergangsbereichen (9) zwischen primärer und wenigstens sekundärer Struktur Metallfolienmaterial entfernt ist, vorzugsweise in ausgestanzter Langlochform.

7. Strukturierte Metallfolie nach einem der Ansprüche 3 bis 6, **dadurch gekennzeichnet, dass** die Keilformen der sekundären Struktur (2) eine alternierende Orientierungsrichtung innerhalb einer Sekundärstrukturkombination aufweisen.

8. Strukturierte Metallfolie nach einem der vorstehenden Ansprüche, **dadurch gekennzeichnet, dass** die geometrischen Formen der sekundären Struktur (2) die sich wiederholende Abfolge ABCD oder A'B'A'C' aufweisen, wobei
A eine linksbündige Keilform (4) im Wellenberg,
B eine zentrische Schaufelform (5) im Wellenberg,
C eine rechtsbündige Keilform (6) im Wellenberg,
D eine Hutzenform (7) im Wellental,
A' ein Bereich (8) der primären Struktur (1) ohne sekundäre Struktur (2),
B' eine sekundäre Struktur (2) mit einem Frequenzverhältnis von 3:2 zur primären Struktur (1) bei gleicher Amplitude und
C' eine sekundäre Struktur (2) mit einem Frequenzverhältnis von 2:1 zur primären Struktur (1) bei kleinerer Amplitude, wobei die sekundäre Struktur (2) aus der Formenfolge rechtsbündige Keilform (6), wellentalzentrische Hutze (7) und linksbündige Keilform (4) besteht, ist.

9. Strukturierte Metallfolie nach einem der vorstehenden Ansprüche, **dadurch gekennzeichnet, dass** die Metallfolie eine Breite von 50 mm bis 210 mm und eine Dicke von 0,02 mm bis 0,12 mm, vorzugsweise eine Dicke von 0,05 mm, aufweist.

## Claims

1. A structured metal foil for a honeycomb body that can be used, in particular, as a catalyst carrier body, with a primary (1) and at least one other, secondary structure (2), wherein the primary structure (1) is realized in the form of a wave structure, wherein at least the secondary structure (2) is at least partially superimposed on the primary structure (1), wherein at least the secondary structure (2) is predominantly arranged parallel to the primary structure (1), wherein at least the secondary structure (2) has a different amplitude than the primary structure (1), wherein at least the secondary structure (2) is realized intermittently, and wherein the secondary structure (2) is formed of structural elements in more than one geometric form, **characterized in that** at least the secondary structure (2) has a different frequency than the primary structure (1), and **in that** the secondary structure (2) is formed of structural elements in more than two geometric forms, preferably of structural elements in four geometrically different forms, wherein the structural elements are provided in an alternating arrangement.

2. The structured metal foil according to Claim 1, **characterized in that** the geometric forms of the secondary structure (2) are provided in an alternating arrangement along and/or transverse to the waves of the first structure (1), particularly in a respectively periodic sequence.

3. The structured metal foil according to Claim 1 or 2, **characterized in that** the structural elements of the secondary structure (2) have, in relation to the wave crests of the primary structure, the form of a right-aligned wedge (6), a left-aligned wedge (4) or a central shovel form (5) and, in relation to the wave troughs of the primary structure (1), the form of a scoop (7) that horizontally rises from the wave trough in the direction of the wave crest.

4. The structured metal foil according to Claim 1, 2 or 3, **characterized in that** the primary structure (1) features periodically repeating regions (8) without further structure.

5. The structured metal foil according to one of the preceding claims, **characterized in that** one structural element of the secondary structure (2) is realized such that it extends over two waves of the primary structure (1), wherein the secondary structure (2) has an amplitude that is lower than or equal to that of the primary structure (1).

6. The structured metal foil according to one of the preceding claims, **characterized in that** metal foil material is removed, preferably in the form of punched-out oblong holes, in all or selected transition regions (9) between the primary structure and at least the secondary structure.

7. The structured metal foil according to one of Claims 3 to 6, **characterized in that** the wedge forms of the secondary structure (2) have an alternating orientation within a secondary structure combination.

8. The structured metal foil according to one of the preceding claims, **characterized in that** the geometric forms of the secondary structure (2) are arranged in the repeating sequence ABCD or A'B'A'C', wherein
A is a left-aligned wedge form (4) in the wave crest,
B is a central shovel form (5) in the wave crest,
C is a right-aligned wedge form (6) in the wave crest,
D is a scoop form (7) in the wave trough,
A' is a region (8) of the primary structure (1) without secondary structure (2),
B' is a secondary structure (2) with a frequency ratio of 3:2 referred to the primary structure (1) and identical amplitude, and
C' is a secondary structure (2) with a frequency ratio of 2:1 referred to the primary structure (1) and lower amplitude, wherein the secondary structure (2) consists of a sequence of the forms right-aligned wedge (6), central scoop (7) of the wave trough and left-aligned wedge (4).

9. The structured metal foil according to one of the preceding claims, **characterized in that** the metal foil has a width between 50 mm and 210 mm and a thickness between 0.02 mm and 0.12 mm, preferably a thickness of 0.05 mm.

## Revendications

1. Film métallique structuré pour un corps alvéolaire qui est utilisable notamment en tant que corps support de catalyseur, avec une structure primaire (1) et une structure supplémentaire, secondaire (2), la structure primaire (1) étant réalisée sous la forme d'une structure ondulée, au moins la structure secondaire (2) étant au moins superposée en partie à la structure primaire (1), au moins la structure secondaire (2) étant principalement disposée à la parallèle de la structure primaire (1), au moins la structure secondaire (2) présentant une amplitude différente de celle de la structure primaire (1), et au moins la structure secondaire (2) étant réalisée sous forme intermittente, la structure secondaire (2) étant conçue en éléments structurels de plus d'une forme géométrique, **caractérisé en ce qu'**au moins la structure secondaire (2) présente une fréquence différente de celle de la structure primaire (1), et **en ce que** la structure secondaire (2) est conçue en éléments structurels de plus de deux formes géométriques, de préférence en éléments structurels de quatre différentes formes géométriques, les éléments structurels étant prévus en s'alternant.

2. Film métallique structuré selon la revendication 1, **caractérisé en ce que** les formes géométriques de la structure secondaire (2) sont prévues en alternance, notamment chaque fois en séquence périodique en s'étendant le long et/ou à la transversale des ondes de la première structure (1).

3. Film métallique structuré selon la revendication 1 ou 2, **caractérisé en ce que** les éléments structurels de la structure secondaire (2) en relation aux crêtes des ondes de la structure primaire sont de forme cunéiforme cadrée à droite (6), cunéiforme cadrée à gauche (4), en forme d'aube centrée (5), et en relation aux creux des ondes de la structure primaire (1) ont la forme d'une courbure (7) croissante à l'horizontale en direction de la crête des ondes.

4. Film métallique structuré selon la revendication 1, 2 ou 3, **caractérisé en ce que** la structure primaire (1) comporte des zones (8) périodiquement récurrentes sans structure supplémentaire.

5. Film métallique structuré selon l'une quelconque des revendications précédentes, **caractérisé en ce qu'**un élément structurel de la structure secondaire (2) est conçu en s'étendant sur deux ondes de la structure primaire (1), la structure secondaire (2) présentant une amplitude inférieure ou égale à celle de la structure primaire (1).

6. Film métallique structuré selon l'une quelconque des revendications précédentes, **caractérisé en ce que** dans toutes les zones de passage ou dans des zones de passage (9) choisies, entre la structure primaire et au moins la structure secondaire, de la matière du film métallique est retirée, de préférence sous la forme d'un trou oblong découpé.

7. Film métallique structuré selon l'une quelconque des revendications 3 à 6, **caractérisé en ce que** les formes cunéiformes de la structure secondaire (2) présentent un sens d'orientation alterné au sein d'une combinaison de structure secondaire.

8. Film métallique structuré selon l'une quelconque des revendications précédentes, **caractérisé en ce que** les formes géométriques de la structure secondaire (2) présentent la séquence récurrente ABCD ou A'B'A'C',
A étant une forme cunéiforme (4) cadrée à gauche dans la crête de l'onde,
B étant une forme d'aube (5) centrée dans la crête de l'onde,
C étant une forme cunéiforme (6) cadrée à droite dans la crête de l'onde,
D étant une forme de courbure (7) dans la crête de l'onde,
A' étant une zone (8) de la structure primaire (1) sans structure secondaire (2),
B' étant une structure secondaire (2) avec un rapport de fréquence de 3:2 à la structure primaire (1), pour une même amplitude et
C' étant une structure secondaire (2) avec un rapport de fréquence de 2:1 à la structure primaire (1), pour une amplitude inférieure, la structure secondaire (2) consistant dans la séquence de forme cunéiforme cadrée à droite (6), courbure centrée (7) dans le creux de l'onde, et forme cunéiforme cadrée à gauche (4).

9. Film métallique structuré selon l'une quelconque des revendications précédentes, **caractérisé en ce que** le film métallique a une largeur de 50 mm à 210 mm et une épaisseur de 0,02 mm à 0,12 mm, de préférence une épaisseur de 0,05 mm.
